Europäisches Patentamt

European Patent Office

Office européen des brevets

(11) Publication number: **0 240 674 B1**

## (12) EUROPEAN PATENT SPECIFICATION

(45) Date of publication of patent specification: **05.08.92** (51) Int. Cl.⁵: **F04D 13/06**, F04D 29/04

(21) Application number: **87102023.6**

(22) Date of filing: **13.02.87**

(54) **Pump.**

(30) Priority: **08.04.86 JP 79259/86**
**03.06.86 JP 127184/86**

(43) Date of publication of application:
**14.10.87 Bulletin 87/42**

(45) Publication of the grant of the patent:
**05.08.92 Bulletin 92/32**

(84) Designated Contracting States:
**DE FR GB IT NL SE**

(56) References cited:
**DE-A- 2 007 288        FR-A- 1 180 630**
**GB-A- 978 683          GB-A- 1 437 532**
**US-A- 3 951 573        US-A- 4 575 264**

**PATENT ABSTRACTS OF JAPAN, vol. 4, no. 137 (E-27)[619], 25th September 1980, page 57 E 27; & JP-A-55 88 545 (MATSUSHITA DENKI SANGYO K.K.)04-07-1980**

**SOVIET INVENTIONS ILLUSTRATED, section P/O, week C51, 4th February 1981, Derwent publications Ltd, London, GB; SU-A-732 577 (A.K. DYACHKOV) 03-10-1978**

(73) Proprietor: **EBARA CORPORATION**
**11-1, Haneda Asahi-cho**
**Ota-ku Tokyo, 144(JP)**

(72) Inventor: **Mizobuchi, Shotaro**
**c/o Ebara Research Co. Ltd. 4720 Fujisawa**
**Fujisawa-shi Kanagawa-ken(JP)**
Inventor: **Kimura, Yoshikazu**
**c/o Ebara Research Co. Ltd. 4720 Fujisawa**
**Fujisawa-shi Kanagawa-ken(JP)**
Inventor: **Sasaki, Katsumi**
**c/o Ebara Research Co. Ltd. 4720 Fujisawa**
**Fujisawa-shi Kanagawa-ken(JP)**

(74) Representative: **Eisenführ, Speiser & Partner**
**Martinistrasse 24**
**W-2800 Bremen 1(DE)**

## Description

BACKGROUND OF THE INVENTION:

The present invention relates to a pump including an impeller having a magnet or a second conductor therein, which is adapted to be directly rotated by virtue of magnetic fields of stator coils, and more particularly to a pump including an impeller which is rotated within a casing in close proximity thereto via ceramic bearing members, one bearing member having spiral grooves on its slide surface.

In a conventional pump, an impeller having a magnet or a secondary conductor therein is directly driven by stator coils, as disclosed in the Japanese Patent Laying-Open Specification No. 49-129106.

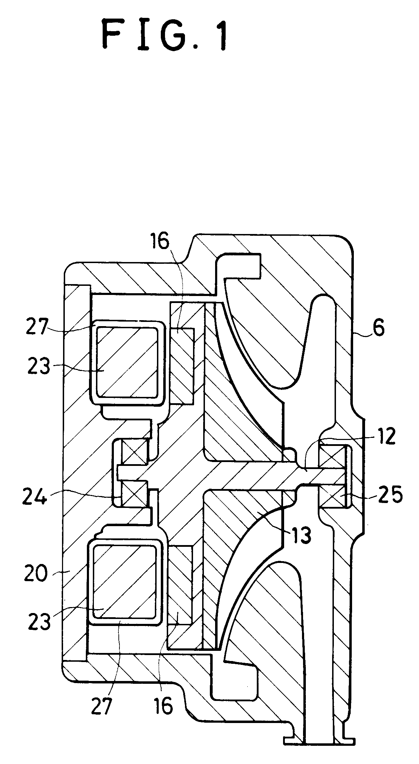

Fig. 1 is a longitudinal cross sectional view of such a conventional pump. In the drawing, an impeller 13 arranged within a pump casing 6 is provided with an annular permanent magnet 16 in its outer rear end perpendicular skew to a rotary axle 12 of the impeller 13, and the surface of the annular permanent magnet 16 is applied by a synthetic resin (not shown) for preventing from contacting with liquid in the casing 6. The rear end of the casing 6 is closed by a rear plate 20 on which stator coils 23 and a rear bearing 24 for supporting the impeller 13 are mounted. A front bearing 25 for supporting the impeller 13 is mounted to the casing 6. The stator coils 23 are covered by a plastic film 27 for preventing from contacting with the liquid.

When the impeller 13 stands still, the impeller 13 is biased towards the rear plate 20 by the drawing force of the permanent magnet 16, and, when the impeller 13 is rotated, in general, the impeller 13 is rushed frontwards of the pump casing 6 by its discharging pressure. Hence, the bearings 24 and 25 are constructed so as to support the radial load as well as the thrust load. The impeller 13 shown in Fig. 1 is a so-called open type having a suitable structure for dealing with liquid containing solid particles such as crystals.

In the conventional pump of Fig. 1, a secondary conductor may be provided in the impeller 13 instead of the permanent magnet 16. In this case, the stator coils 23 are so wound as to impart rotary magnetic fields when an alternating current is applied to the stator coils 23.

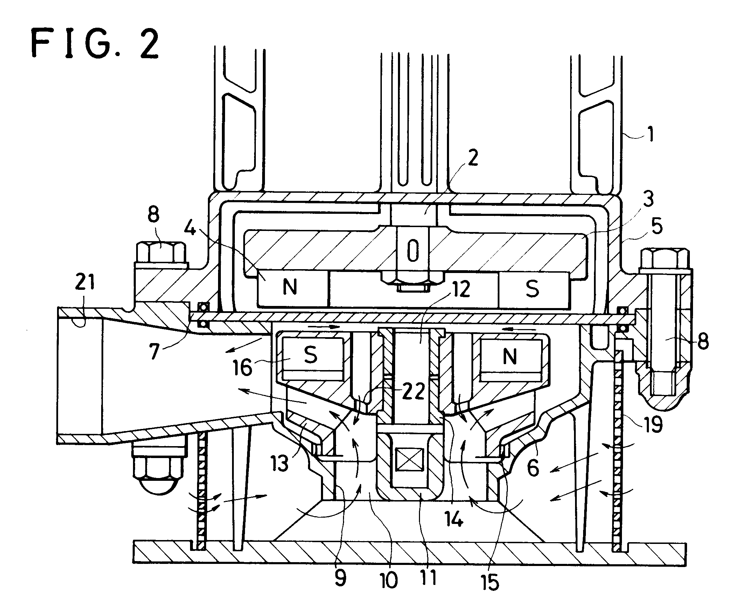

In Fig. 2, there is shown another conventional pump. In this embodiment, a motor 1 has a rotary shaft 2 therein, and an iron yoke 3 is secured to the free end of the rotary shaft 2. An annular permanent magnet 4 is attached to the iron yoke 3, and the N and S polarities are alternately magnetized at an equal distance in the peripheral direction of the annular permanent magnet 4. A lower bracket 5 of the motor 1 is mounted to a pump casing 6 through a non-magnetic partition plate 7 by bolts and nuts 8. A plurality of arm members 10 are radially arranged in a suction opening 9 of the pump casing 6, and suction paths are defined by the arm members 10. A boss 11 is disposed to the center of the arm members 10, and a rotary pump shaft 12 which is coaxial with the rotary shaft 2 of the motor 1, is mounted to the boss 11. A bearing metal 14 having flanges, press-fitted in a central hole of an impeller 13, is fitted on the rotary pump shaft 12. A liner ring 15 is press-fitted in the suction opening portion of the pump casing 6 in order to seal the gap between the outer periphery of the suction inlet of the impeller 13 and the inner surface of the pump casing 6.

In the upper end of the impeller 13, permanent magnets 16 of different N and S polarities are alternately and radially arranged, opposing the annular permanent magnet 4 of the motor 1 via the partition plate 7.

When the motor 1 is driven, the rotary shaft 2 is rotated together with the yoke 3 and the annular permanent magnet 4, and then the permanent magnets 16 of the impeller 13 are driven by the magnetic force of the annular permanent magnet 4, thereby rotating the impeller 13 around the pump shaft 12. Accordingly, the liquid is sucked from the suction opening 9 of the pump casing 6 and then is sucked up by the impeller 13, and the pressurized liquid is discharged from an outlet 21 of the pump casing 6. The part of the pressurized liquid flows between the upper part of the impeller 13 and the partition plate 7 towards the central portion to pass through balancing holes 22 and is then returned to the low pressure side in the impeller 13, with the result of balancing the pump thrust.

In the above described pump, the rotary shaft 2 of the motor 1 is separated from the rotary pump shaft 12, and hence no special sealing means for the shaft is necessary, and the liquid in the pump side is separated from the motor side by the partition plate 7. Accordingly, a strong acidic liquid, a strong alkaline liquid, a strong toxic liquid or a liquid to be shut off from leaking outside may be transferred by the pump of this kind, and further, in turn, by using this pump, a liquid to be dealt with may be prevented from mixing of a contaminant from the outside in a producing process of foods, medicines, soft drinks, semi-conductors and so forth.

However, in fact, in the conventional pumps shown in Figs. 1 and 2, the impeller is supported by the bearings in contact therewith, and thus, when the impeller is rotated, the worn powder is produced from the bearing portions. In the conventional pump of Fig. 2, the magnetic gap between the annular permanent magnet 4 of the driving side and the permanent magnets 16 of the impeller 13 is increased, and accordingly the pump having a large output cannot be obtained. Further, in these conventional pumps, when stopping the pumps for a long time, the material of the bearings is subjected to a plastic deformation by affecting the drawing force of the permanent magnets, and, when the pump is driven again, it is impossible to operate the pump or a large starting torque is necessary to start the pump. Further, in the conventional pumps, since the rotary shaft of the impeller is supported by the bearing means or the impeller is rotatably supported at its axle by the bearing means, that is, the conventional impeller requires a rotary shaft having a certain length along the axis of the impeller, the length of the impeller and hence of the pump in the axial direction is restricted and can not be compacted.

The most relevant prior art is disclosed in US-PS 3,951,573.

This reference discoses a "fluid lubricated bearing construction" with a first bearing member having a plain bearing surface, a second bearing member having a bearing surface confronting the bearing surface of said first bearing member and provided with at least one spiral groove extending inwardly from the periphery of said second bearing member, one of said bearing members having an axial fluid-tight well, a source of fluid lubricant adjacent to the periphery of said second bearing member and means for relatively rotating said bearing members to cause said lubricant to be drawn through said groove and to flow between said bearing surfaces, whereby a suffcient pressure is build up between said bearing surfaces and in said well to tend to separate said bearing surfaces.

However, a disadvantage of this construction is a remarkable axial lenght and number of radial bearings to be used for supporting the rotating member including a motor rotor.

It is an object of the invention to provide a pump having a magnetic gap in its axial direction without the defects and disadvantages of the prior art, which is capable of reducing a starting torque, of supporting a thrust of the pump with a small power loss during the operation, of preventing from producing of the worn powder from the bearing portions, of effectively removing the heat generated in the stator coils, of minimizing the staying of the liquid in a pump casing and of producing a large output, and which is simple and compact in construction.

The inventive solution of this object is achieved by the features of claim 1.

In a preferred embodiment of the invention, the ceramic material is a sintered body selected from the group consisting of $\alpha$-SiC, $\beta$-SiC, $Al_2O_3$ and $Si_3N_4$, and the spiral groove pattern is formed by a shot-blasting process.

In another preferred embodiment of the invention, the first element is secured to the central portion of the rear end of the impeller, the rear end of the impeller facing to the separating means, and the first element is provided with the spiral groove pattern on its flat surface. Alternatively, the first element is secured to the central portion of the front end of the impeller, the rear end of the impeller facing to the separating means, and the second element is provided with the spiral groove pattern on its flat surface.

In still another preferred embodiment of the invention, the first element is an annular plate, and the second element is an annular plate of the same form as that of the second element, the second element being mounted to the inlet portion of the casing. The pump further comprises a third element secured to the central portion of the rear end of the inpeller in a plane perpendicular to the rotary axis of the impeller, and a fourth stationary element arranged in the casing opposing to the third element in parallel therewith, the third and the fourth elements being made of a ceramic material.

The impeller is provided with a central through-hole along its rotary axis, and the first element is an annular plate which is secured to the impeller coaxially with the central through-hole. The first element is a circular plate which is secured to impeller coaxially with its rotary axis.

The driving force receiving means is an annular permanent magnet which is arranged in the outer rear end of the impeller and surrounds the first element.

Other and further objects, features and advantages of the invention will appear more fully from the following description with reference to the preferred embodiments thereof taken in conjunction with the accompanying drawings, in which:

BRIEF DESCRIPTION OF THE DRAWINGS:

Fig. 1 is a longitudinal cross sectional view of a conventional pump;

Fig. 2 is a longitudinal cross sectional view of another conventional pump;

Fig. 3 is a longitudinal cross sectional view of one embodiment of a pump according to the present invention;

Fig. 4 is an end view of a disk plate defining a rotary slide surface of the pump of Fig. 3;

Fig. 5 is an end view of an impeller of the pump of Fig. 3;

Fig. 6 is a longitudinal cross sectional view of another embodiment of the pump according to the present invention;

Fig. 7 is a longitudinal cross sectional view of a bearing portion of the pump of Fig. 6;

Fig. 8 is an end view of a bearing plate of the pump of Fig. 6;

Fig. 9 is a longitudinal cross sectional view of a still another embodiment of the pump according to the present invention; and

Fig. 10 is a top view of a disk plate mounted to an impeller of the pump of Fig. 9.

## DESCRIPTION OF THE PREFERRED EMBODIMENTS:

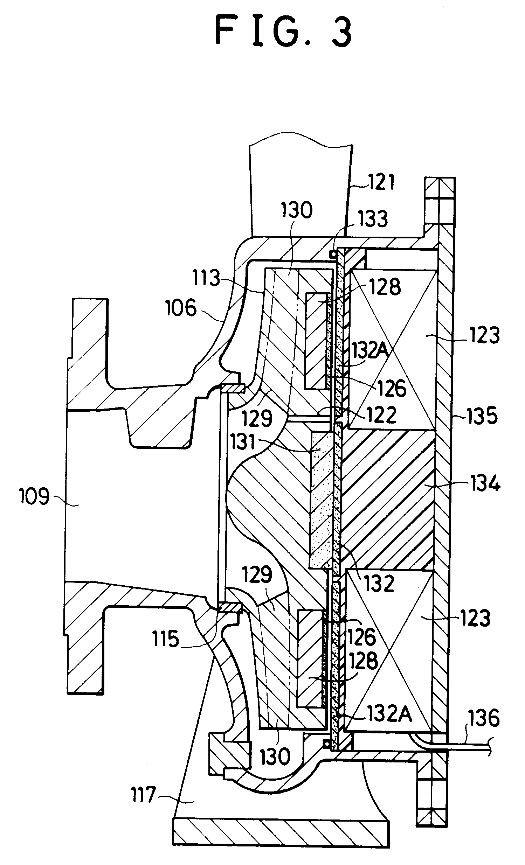

Referring now to the drawings, wherein like reference numerals designate similar or corresponding components throughout the different figures, there is shown in Fig. 3 one embodiment of a pump according to the present invention.

In the drawing, an impeller 113 is arranged in a pump casing 106, and an annular permanent magnet 128 is embedded in an outer rear end portion of the impeller 113 perpendicular skew to a rotary axis thereof. An annular ceramic protecting thin plate 126 is adhered to the outer surface of the magnet 128 for protecting the magnet 128. In the annular permanent magnet 128, different magnetic polarities are alternately imparted at equal distance in its peripheral direction. Reference numerals 129 and 130 denote blades of the impeller 113 and flow paths, respectively.

The impeller 113 is provided with a ceramic flat disk plate 131 in its central rear end constituting a bearing portion, and the disk plate 131 made of a silicon carbide sintered body by an atmospheric sintering process, defines a rotary slide surface. The rotary slide surface of the ceramic disk plate 131 is finished smooth, for instance, Rmax ≦ 3 μm or so by a lapping process, and then spiral grooves 138 having a depth of about 3 - 50 μm are formed by a shot-blasting process.

Reference numerals 109, 115, 117, 121 and 122 designate an inlet, a liner ring press-fitted in the casing 106, a leg portion, an outlet and a balancing hole formed in the impeller 113.

The rear opening of the pump casing 106 is closed by a rear casing 135 by tightening their flange portions by means of bolts and nuts (not shown), and stator coils 123 are radially mounted to the inner wall of the rear casing 135 corresponding to the polarities of the annular permanent magnet 128. The front sides of the stator coils 123 are covered and sealed by a synthetic resin 134 for preventing from the liquid in the pump casing 106. A circular ceramic bearing plate 132 made of the same material as the ceramic disk plate 131 is adhered to the synthetic resin 134 opposing to the disk plate 131 to be adapted to abut thereon and is positioned in the center with reference to the stator coils 123. The surface of the ceramic bearing plate 132 is finished to be smooth in the same manner as the ceramic disk plate 131 and defines a slide surface corresponding to the slide surface of the ceramic disk plate 131. An annular ceramic plate 132A is adhered to the synthetic resin 134 opposite to the annular permanent magnet 128 with a gap therebetween for preventing the surface of the synthetic resin 134 covering the stator coils 123 from wearing off by solid particles in the liquid or the shearing stress of the liquid. The annular ceramic plate 132A may be made of the same material as the ceramic disk plate 131, and, in consideration that the annular ceramic plate 132A is backed by the synthetic resin 134 and the stator coils 123 and the annular ceramic plate 132A is attached to the synthetic resin 134 as a wearproof member therefor, the annular ceramic plate 132A may be thinned compared with the ceramic bearing plate 132, resulting in that a magnetic gap may be reduced.

In the inner surface of the pump casing 106, a groove is formed and an O-ring 133 is fitted in the groove for sealing the contact surfaces between the ceramic plate 132A and the pump casing 106 from the liquid in the pump casing 106. The stator coils 123 are connected to an electric power source (not shown) through electric wires 136. A hole element (not shown) is attached to the rear surface of the ceramic plate 132A for detecting the polarities of the annular permanent magnet 128. The detected polarities are sent to a control means (not shown) and the impeller 113 may be rotated in the best conditions by controlling the stator coils 123 by means of the control means.

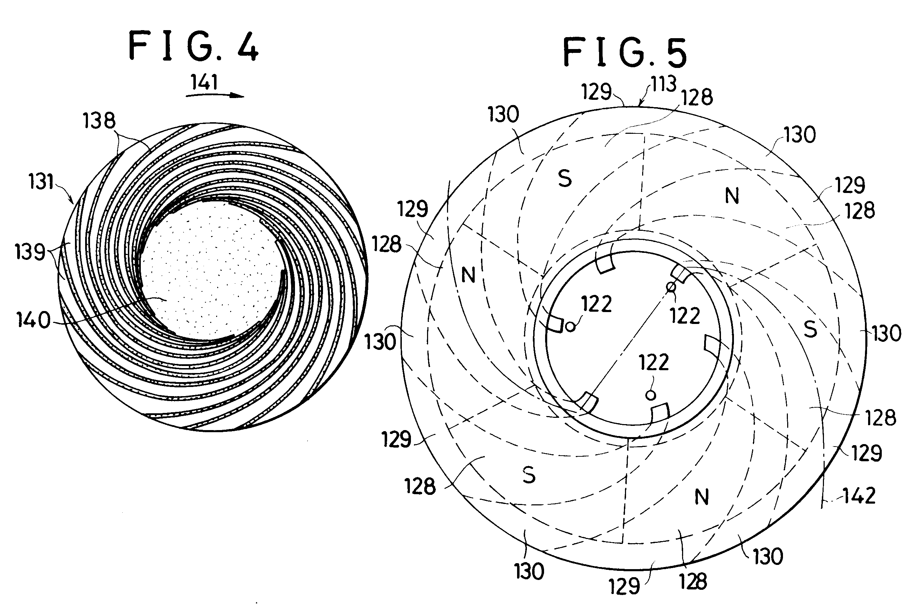

In Fig. 4, there is shown the rotary slide surface of the ceramic disk plate 131 shown in Fig. 3. A plurality of spiral grooves 138 are formed on the rotary slide surface of the ceramic disk plate 131 and the spiral grooves 138 are excavated in depth of about 3 - 50 @m between ridges or lands 139 between the spiral grooves 138. The ceramic disk plate 131 is formed with a central recessed portion 140 leading to all spiral grooves 138.

The ceramic disk plate 131 is produced as follows. First, the slide surface of the ceramic disk plate 131 is finished to be smooth such as $R_{max}$ ≦ 3 μm or so by the lapping process, as described above, and then the smoothed surface is covered by a plastic or metallic mask corresponding to the shape of the lands 139. Then, the masked slide surface of the ceramic disk plate 131 is treated by the shot-blasting process to form the spiral grooves 138. The shape of the spiral grooves 138 may be a conventional spiral pattern.

An arrow 141 of Fig. 4 indicates a turning direction of the impeller 113. When the impeller 113 is rotated, the liquid is sucked into between the rotary slide surface of the ceramic disk plate 131 and the slide surface of the ceramic bearing plate 132, and the rotating impeller becomes close proximity to the pump casing 106. Hence, the impeller 113 is substantially supported by the liquid film between the ceramic disk plate 131 and the ceramic bearing plate 132 during the rotation of the impeller 113. Accordingly, the ceramic disk plate 131 of the impeller 113 is not directly contacted with the ceramic bearing plate 132 of the stationary side while the impeller 113 is rotated.

In Fig. 5, there is shown the impeller 113 seen from its suction opening side. This impeller 113 is a so-called closed type and is provided radially with liquid paths 130 in its inside. In this case, six polarities are magnetized in the annular permanent magnet 128 at an equal distance and a plurality of polarities may be generally imparted in the annular permanent magnet 128. A plurality of wings 129 defining the liquid paths 130 are widened in the outer direction, but this structure is not essential. A numeral 142 of Fig. 5 indicates a one-dotted sectional line of the impeller 113 shown in Fig. 3.

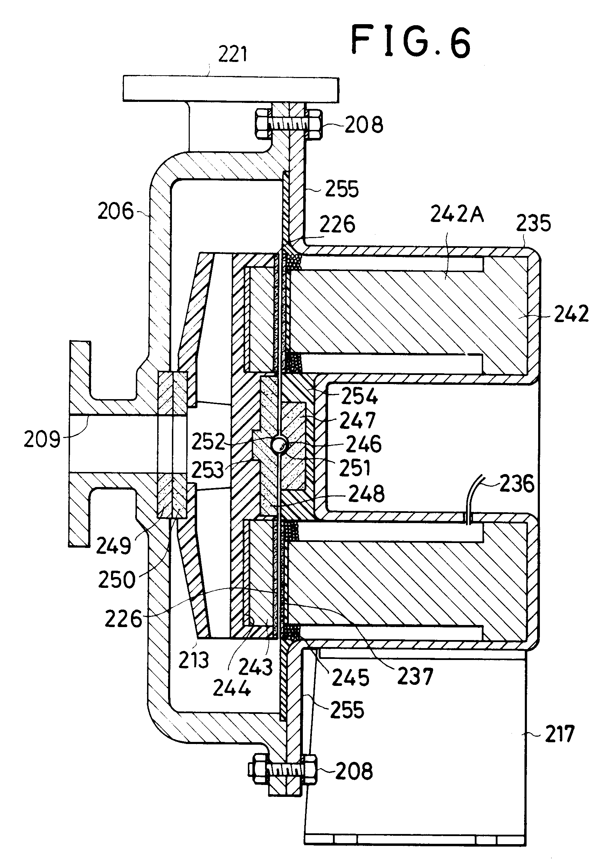

In Fig. 6, there is shown another embodiment of the pump according to the present invention. This embodiment of the pump includes a pivot bearing means and a dynamic pressure bearing means as described in detail hereinafter. In this case, a pump casing 206 and a rear casing 235 are coupled to each other by bolts and nuts 208, and a impeller 213 is arranged in the pump casing 206.

The rear casing 235 made of a stainless steel plate is formed with a rear peripheral annular projection space, and a plurality of magnetic cores 242, each having a reduced projection 242A in its front, are radially arranged in the rear peripheral annular projection space of the rear casing 235 at an equal interval. A plurality of stator coils 245 are wound around the projections 242A along their entire lengths, parts of which are shown in Fig. 6, and the front ends of the cores 242 and the stator coils 245 are protected by an annular ceramic protecting plate 237. In the center of the rear casing 235, a hard ceramic bearing plate 247 having a hemispherical groove 251 on its central surface is secured via a synthetic resin 254. The synthetic resin 254 is also applied to the stator coils 245, between the annular ceramic protecting plate 237 and the stator coils 245 and to an inner surface of a flange portion 255 of the rear casing 235.

In practice, the ceramic bearing plate 247 and the ceramic protecting plate 237 together with the cores 242 and the stator coils 245 are secured to the rear casing 235 as follows. That is, firstly, the cores 242 on which the stator coils 245 are wound in advance, are mounted to the rear casing 235 by screws or the like. Then, the ceramic bearing plate 247 having the hemispherical groove 251, the ceramic protecting plate 237 and the rear casing 235 along with the cores 242 and the stator coils 245 are set to a metallic mold of an injection molding apparatus, and then the molten synthetic resin 254 is injected into the metallic mold and then is cured therein. In this case, the synthetic resin flows into not only the space between the ceramic bearing plate 247 and the rear casing 235 but also between the ceramic protecting plate 237 and the stator coils 245, into the stator coils themselves and to the inner surface of the flange portion 255 of the rear casing 235. Accordingly, the liquid in the pump casing 206 only contacts with the ceramic members and the synthetic resin of the rear casing 235.

An annular hard ceramic bearing plate 249 is adhered to the inner wall of the pump casing 206 at the rear end of a suction opening 209 thereof in a plane perpendicular to the axis of the pump casing 206 by using an adhesive, and an annular hard ceramic end plate 250 is secured to the front end of the impeller 213 opposite to the surface of the annular hard ceramic bearing plate 249. The opposite surfaces of the annular hard ceramic bearing plate 249 and the annular hard ceramic end plate 250 are finished to be smooth in the same manner as the embodiment of Fig. 3, and the annular hard ceramic bearing plate 249 is formed with spiral grooves in the same manner as the embodiment of Fig. 3. The annular hard ceramic bearing plate 249 and the annular hard ceramic end plate 250 constitute a bearing means.

The impeller 213 is provided with an annular permanent magnet 243 in its outer rear end portion. An annular iron thin plate 244 is arranged between the annular permanent magnet 243 and the impeller 213 for promoting the magnetic efficiency, and an annular ceramic protecting plate 226 is adhered to the surface of the annular permanent magnet 243 for protecting the same. The impeller 213 is made of a synthetic resin material such as fluororesin and polypropylene resin. The impeller 213 is formed with a hard ceramic rear end plate 248 on its central rear end, and the ceramic rear end plate 248 has a semispherical groove 252 on its central surface and a projection 253 on its central front end opposite to the semispherical groove 252 for supplementing the strength drop of the ceramic end plate 248 due to the formation of the semispherical groove 252. In this case, the rear end surface of the ceramic end plate 248 more projects rearwards than that of the ceramic protecting plate 226 in the axial direction, and hence the gap between the ceramic bearing plate 247 and the ceramic end plate 248 is smaller than that between the ceramic protecting plates 226 and 237.

The semispherical grooves 251 and 252 of the ceramic bearing plate 247 and the ceramic end plate 248 are so positioned along the rotary axis of the impeller 213 as to constitute substantially a spherical space, and a hard ceramic small ball 246 is arranged within the spherical space composed of the semispherical grooves 251 and 252 so that the diameter of the ceramic small ball 246 may be slightly larger than that of the spherical space composed of the semispherical grooves 251 and 252, with the result that the ceramic bearing plate 247, the ceramic end plate 248 and the ceramic small ball 246 constitute a pivot bearing means. The opposite surfaces of the ceramic bearing plate 247 and the ceramic end plate 248 are finished to be smooth in the same manner as the ceramic bearing plate of the embodiment of Fig. 3.

In Fig. 6, the length between the front surface of the ceramic front end plate 250 and the rear surface of the ceramic rear end plate 248 of the impeller 213 is shorter than that between the surface of the ceramic front bearing plate 249 and the surface of the ceramic rear bearing plate 247. The stator coils 245 are connected to an electric power source (not shown) through electric wires 236. Since the ceramic protecting plate 237 is reinforced by the synthetic resin 254, the thickness of the ceramic protecting plate 237 may be reduced. When coupling the pump casing 206 and the rear casing 235 by means of the bolts and nuts, the contact surfaces between these two members are properly sealed by the synthetic resin 245 applied onto the inner surface of the flange portion 255 of the rear casing 235. Alternatively, an O-ring or an adhesive may be used between the contact surfaces of the pump casing 206 and the rear casing 235 for sealing therebetween.

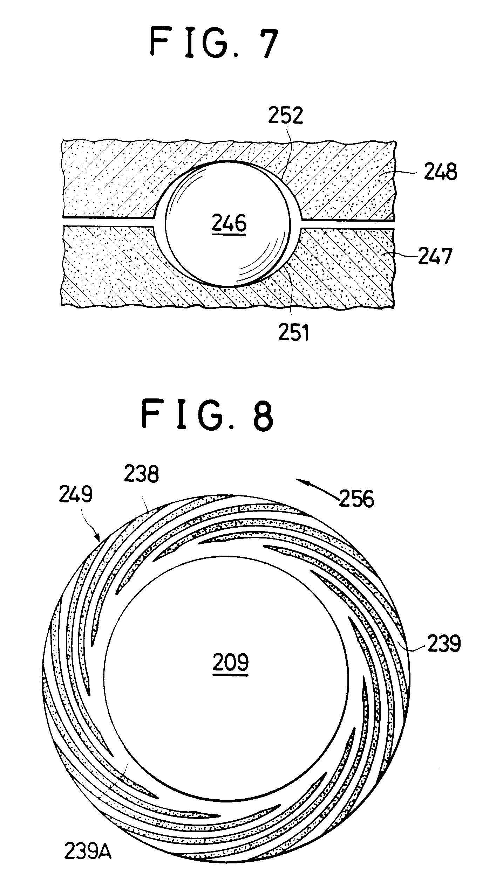

Fig. 7 is a longitudinal cross sectional view of the semispherical grooves 251 and 252 of the ceramic bearing plate 247 and the ceramic end plate 248 and the ceramic small ball 246 arranged in the spherical space composed of the semispherical grooves 251 and 252. As shown in Fig. 7, the ceramic small ball 246 has a true sphere form, but the spherical space composed of the semispherical grooves 251 and 252 has slightly an elliptic longitudinal cross section. In practice, as shown in Fig. 7, when the ceramic small ball 246 is contacted with the bottoms of the semispherical grooves 251 and 252 of the ceramic bearing plate 247 and the ceramic end plate 248, the average gap between the ceramic bearing plate 249 and the ceramic end plate 250 at the suction opening 209 of the pump casing 206 is 0.1 - 0.3 mm.

Next, when the stator coils 245 are switched on, the impeller 213 is drawn towards the stator coils 245 by virtue of the magnetic force at a low speed, and the impeller 213 is supported at its rear end by the pivot bearing means composed of the ceramic small ball 246, the ceramic bearing plate 247 and the ceramic end plate 248. Then, as the rotation speed of the impeller 213 increases, the pumping pressure is caused and thus the impeller 213 is moved towards the suction opening 209 by the back pressure. Then, the gap between the ceramic bearing plate 249 and the ceramic end plate 250 is reduced, and the impeller 213 is rotated in close proximity to the pump casing 206 at a dynamic pressure bearing means composed of the ceramic bearing plate 249 and the ceramic end plate 250. Hence, a dynamic pressure is generated at this dynamic pressure bearing means, and therefore, even when the large thrust load is given to the dynamic pressure bearing means, the liquid film is formed between the ceramic bearing plate 249 and the ceramic end plate 250. Accordingly, the ceramic end plate 250 of the impeller 213 is not directly contacted with the ceramic bearing plate 249 of the pump casing 206 during the regular rotation of the impeller 213. Hence, it is readily understood that the thrust load of the impeller 213 is supported depending on its rotation speed such as by the pivot bearing means at the low speed range and by the dynamic pressure bearing means at the regular speed. The radial load of the impeller 213 is supported by the magnetic force and the ceramic small ball 246.

When the discharging pressure of the pump is small, since the impeller 213 is always drawn towards the stator coils 245 by the magnetic force, the pivot bearing means between the rear end of the impeller 213 and the stator coils 245 should be changed to a dynamic pressure bearing means, as shown in the embodiment of Fig. 3. In this modified embodiment, the diameter of the ceramic small ball 246 is reduced to be slightly smaller than that of the spherical space composed of the semispherical grooves 251 and 252, and one of the ceramic bearing plate 247 and the ceramic end plate 248 is formed with spiral grooves around its semispherical groove 251 or 252 in the same manner as described above. In this case, the ceramic small ball 246 only supports the radial load of the impeller 213 and the thrust load of the impeller 213 is supported by the dynamic pressure bearing means composed of the ceramic bearing plate 247 and the ceramic end plate 248.

In Fig. 8, there is shown the grooved surface of the ceramic bearing plate 249 mounted at the suction opening 209 of the pump casing 206, and an arrow 256 indicates the regular turning direction of the impeller 213. When the impeller 213 is rotated at the regular speed, the thrust load is imposed on the front side of the pump casing 206, and the ceramic end plate 250 becomes close proximity to the ceramic bearing plate 249. Then, the liquid in the pump casing 206 flows in the spiral grooves 238 from their peripheries to the center, and, since the flow paths are narrowed by the innermost lands 239A, the dynamic pressure is generated on this slide surface.

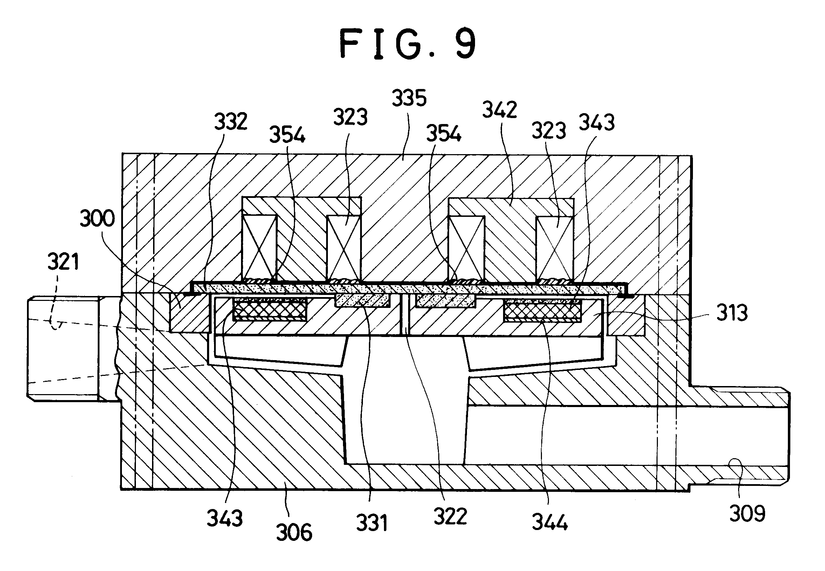

In Fig. 9, there is shown still another embodiment of the pump according to the present invention. The upright pump comprises a pump casing 306 having a suction inlet 309 and an outlet 321, an impeller 313 made of a synthetic resin material, arranged within the pump casing 206, and an upper casing 335 mounted on the pump casing 306.

A plurality of magnetic cores 342 are mounted to the upper casing 335, and a plurality of stator coils 323 are wound around the respective cores 342. A ceramic large disk plate 332 covers the lower ends of the stator coils 323 and the cores 342 and is adhered to the lower end of the upper casing 335 as well as the stator coils 323 and the cores 342 by using a synthetic resin 354.

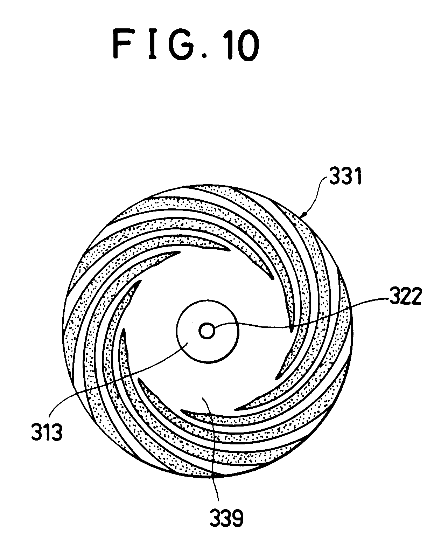

The impeller 313 is provided with an annular permanent magnet 343 in its outer upper end portion, and an annular iron thin plate 344 is arranged under the annular permanent magnet 343. The impeller 313 is formed with a balancing hole 322 along its rotary axis, and an annular ceramic disk plate 331 is coaxially secured to the central upper end of the impeller 313 with the balancing hole 322. The annular ceramic disk plate 331 is formed with spiral grooves in the same manner as those of the embodiments described above, as shown in Fig. 10. The annular ceramic disk plate 331 possesses a circular land 339 on its upper center so that a dynamic pressure may be generated upon the spiral groove area.

In this embodiment, by providing with the balancing hole 322 along the axis of the impeller 313, the back pressure to the impeller 313 is balanced with the pressure of the inlet 309. Accordingly, the back pressure of the central portion of the impeller 313 is removed, and hence, when the impeller 313 receives the thrust load, the impeller 313 is biased towards the stator coils 323. In this embodiment, there is no bearing for supporing the radial load. The synthetic resin 354 is applied between the ceramic large disk plate 332 and the stator coils 323, and hence the thickness of the ceramic large disk plate 332 may be reduced. A numeral 300 denotes an annular supporing member mounted to the pump casing 306 for supporing the annular ceramic large disk plate 332.

In the preferred embodiments of the invention, when the polarities of the permanent magnet mounted to the impeller are four, the number of the polarities of the stator coils is preferably five or six. When the number of the polarities of the permanent magnet of the impeller is six, as shown in Fig. 6, the number of the polarities of the stator coils is preferably six to eight.

In the preferred embodiments of the invention, the ceramic material for making the bearing plates and other members is $\alpha$-SiC, $\beta$-SiC, $Al_2O_3$, $Si_3N_4$ or the like.

It is readily understood from the above description that in the pump according to the present invention, the spiral groove pattern is formed to one of the opposed surfaces of the ceramic end plate of the impeller and the ceramic bearing plate of the pump casing for producing the dynamic pressure by the shot-blasing process, and the ceramic end plate and the ceramic bearing plate constitute a dynamic pressure bearing means. When the impeller is rotated and the impeller is biased towards the dynamic pressure bearing means by the thrust or its weight, the liquid film is formed between the two bearing members by means of the spiral grooves, and accordingly the impeller is not directly contacted with the casing at the dynamic pressure bearing means. Further, the ceramic members used in the bearing means and other portions of the pump have superior properties such as a corrosion reristance to various liquid, a wearproof and so forth.

For instance, in the dynamic pressure bearing means comprising a pair of hard ceramic disk plates having a diameter of 86 mm, one disk plate having a spiral groove pattern formed by the shot-blasing process, this bearing means can bear the thrust load of more than one ton at 2000 r.p.m. under water at an ambient temperature, and hence the thrust load less than 50 kgf usually produced in the pump of this kind can be sufficiently supported. In this case, the power loss is quite small.

In the pump of Fig. 6, a foreign substance (solid) cannot easily come in between the impeller and the stator coils, but, even if the foreign substance comes in, the end plate and the protecting plate of the impeller and the bearing plate and the protecting plate of the stator coil side are made of the hard ceramic material, thereby having an extreme durability. Further, even when the ceramic protecting plates are broken away, since they are backed by the synthetic resin, the liquid cannot leak outside and the components cannot be corroded.

In the pump of Fig. 6, when the pump is started to operate, the impeller is supported by the small ball of the pivot bearing means, and thus the starting torque required is quite small. This feature is very advantageous when dealing with a liquid containing a viscous or sticky substance. Further, since the stator coils are contacted to the liquid via the thin ceramic protecting plate, the heat generated in the stator coils and the cores can be quickly released to the liquid with a high heat radiation effect.

Further, in the pumps of the present invention, since the liquid staying space in the pump casing is very small, the cleaning of the inside of the pump may be readily conducted. Further, a readily deteriorative liquid may be conveniently dealt with, and such a liquid may not stay for a long time in the pump to prevent the deterioration.

Further, since the magnetic fields of the stator coils affect from the cores to the permanent magnet of the impeller through the thin ceramic protecting plates, the large rotating torque can be obtained.

In the pump of Fig. 6, on starting and stopping of the pump, the solid contact is carried out in the pivot bearing means only when the pumping pressure is low, but, since the relative rotating speed is small in the pivot bearing means, substantially the wear may not caused. Under the regular operation speed, the impeller is supported by the dynamic pressure bearing means, and hence, even when the worn powder is produced in the pump, the liquid to be pumped may not be contaminated.

In the upright pump of the invention, since the impeller is rotated around a vertical axis and the weight of the impeller functions as the thrust load, the radial load can be much reduced. In this case, the dynamic pressure bearing means for supporting the thrust load has a large surplus in the bearing function, and this load allotment is preferable.

Although the permanent magnet is arranged in the impeller in the preferred embodiments of the invention, an annular secondary conductor may be arranged in the impeller, and the six to eight polarities of the stator coils are disposed to make the secondary conductor to generate the induced current by the rotaty magnetic fields of the stator coils, thereby generating the rotary torque to the impeller. In this case, there is no drawing force of the permanent magnet, and the starting torque for the impeller is very small. Further, the dynamic pressure bearing means may be designed by considering only the back pressure of the pump.

## Claims

1.  A pump comprising:
    a casing (106,135;206,235;306,335) having an inlet (109; 209;309) and an outlet (121;221;321);
    an impeller (113;213;313) having a rotary axis, arranged within the casing (106,135;206,235;306,335);
    rotor means (128;243;343) disposed in the impeller ;
    stator means (123;242,245;323,342) arranged in the casing (106,135;206,235;306,335), which imparts the driving force to the rotor means (128;243;343) ;
    a first element (131;250;331) secured to one end of the impeller (113;213;313) in a plane perpendicular to the rotary axis of the impeller (113;213;313); and
    a second stationary element (132;249;332) arranged in the casing (106,135;206,235;306,335), opposite to the first element (131;250;331) in parallel therewith,
    the first and the second elements (131,132;250,249;331, 332) being formed with a respective flat surface, the surfaces being opposite to each other, one of the opposed flat surfaces of the first and the second elements having a spiral groove pattern (138;238), characterized in that the rotor means (128;243;343) and the stator means (123;242,245;323,342) are disposed in an axial direction of said rotary axis of the impeller (113;213;313) with an axial gap therebetween so that the magnetic force between the rotor means and the stator means radially supports the impeller.

2.  A pump as claimed in claim 1, wherein the pump further comprises separating means (132A;237;332) extending in a plane perpendicular to the rotary axis of the impeller (113;213;313) and mounted to the casing (106,135;206,235;306,335) for separating the impeller (113;213;313) from the stator means (123;242,245;323,342).

3.  A pump as claimed in claim 1, wherein the first and the second elements (131,132;249,250;331,332) are made of a ceramic material.

4.  A pump as claimed in claim 3, wherein the ceramic material is a sintered body selected from the group consisting of $\alpha$-SiC, $\beta$-SiC, $Al_2O_3$ and $Si_3N_4$.

5.  A pump as claimed in claim 3, wherein the spiral groove pattern is formed by a shot-blasting process.

6.  A pump as claimed in claim 2, wherein the first element (131;321) is secured to the central portion of the rear end of the impeller (113;313), the rear end of the impeller facing to the separating means (132A;332), and the first element is provided with the spiral groove pattern (138) on its flat surface.

7.  A pump as claimed in claim 2, wherein the first element (250) is secured to the central portion of the front end of the impeller (213), the rear end of the impeller facing to the separating mean (237), and the second element (249) is provided with the spiral groove pattern (238) on its flat surface.

8. A pump as claimed in claim 6, wherein the impeller (313) is provided with a central through-hole (322) along its rotary axis, and the first element (331) is an annular plate which is secured to the impeller coaxially with the central through-hole.

9. A pump as claimed in claim 6, wherein the first element (131;331) is a circular plate which is secured to the impeller (113;313) coaxially with its rotary axis.

10. A pump as claimed in claim 7, wherein the first element (250) is an annular plate, and the second element (249) is an annular plate of the same form as that of the first element, the second element being mounted to the inlet portion of the casing (206).

11. A pump as claimed in claim 10, wherein the pump further comprises a third element (248) secured to the central portion of the rear end of the impeller (213) in a plane perpendicular to the rotary axis of the impeller, and a fourth stationary element (247) arranged in the casing opposite to the third element in parallel therewith, the third and the fourth elements being made of a ceramic material.

12. A pump as claimed in claim 8, wherein the rotor means (343) is an annular permanent magnet which is arranged in the outer rear end of the impeller (313) and surrounds the first element (331).

13. A pump as claimed in claim 9, wherein the rotor means is an annular secondary conductor which is arranged in the outer rear end of the impeller and surrounds the first element.

14. A pump as claimed in claim 11, wherein the rotor means (243) is an annular permanent magnet which is arranged in the outer rear end of the impeller (213) and surrounds the third element (248).

15. A pump as claimed in claim 11, wherein the third and the fourth elements (248,247) are each provided with grooves (252,251) on their opposed surfaces along the rotary axis of the impeller (213), and a small ball (246) is arranged in a space composed of the grooves.

16. A pump as claimed in claim 12, wherein the annular permanent magnet (343) is covered by an annular ceramic thin plate over its outer surface and is attached by an annular iron plate (344) over its back surface.

17. A pump as claimed in claim 14, wherein the annular permanent magnet (243) is covered by an annular ceramic thin plate (226) over its outer surface and is attached by an annular iron plate (244) over its back surface.

18. A pump as claimed in claim 13, wherein the annular secondary conductor is covered by an annular ceramic thin plate over its outer surface.

19. A pump as claimed in claim 15, wherein the diameter of the small ball (246) is larger than that of the space so that the opposed surfaces of the third and the fourth elements (248;246) may be separated from each other.

20. A pump as claimed in claim 15, wherein the diameter of the small ball is smaller than that of the space, the third and the fourth elements being adapted to abut against each other at their flat surfaces, one of the opposed flat surfaces of the third and the fourth elements having a spiral groove pattern.

21. A pump as claimed in claim 16, wherein the second element (332) is a ceramic thin plate which covers the stator means (323,342) on one end opposite to the impeller (313) through a synthetic resin (354) and is mounted to the casing (335) so as to seal the stator means from the liquid and to separate the stator means from the impeller.

22. A pump as claimed in claim 17, wherein the stator means (242,245) is covered on one end opposite to the impeller (213) by a ceramic thin plate (237), and the fourth element (247) is mounted to the casing (235) via a synthetic resin (254), the ceramic thin plate, the synthetic resin and the fourth element sealing the stator means from the liquid and separating the stator means from the impeller.

23. A pump as claimed in claim 18, wherein the stator means (123;323,342) is covered on one end opposite to the impeller (113;313) by a ceramic thin plate (132A;332), and the second element (132;332) is mounted to the casing (133;335) via a synthetic resin (134;354), the ceramic thin plate, the synthetic resin and the second element sealing the stator means from the liquid and separating the stator means from the impeller.

**24.** A pump as claimed in claim 9, wherein the rotor means (128;343) is an annular permanent magnet which is arranged in the outer rear end of the impeller (113;313) and surrounds the first element (131;331).

**25.** A pump as claimed in claim 15, wherein the rotor means is an annular secondary conductor which is arranged in the outer rear end of the impeller and surrounds the third element.

**26.** A pump as claimed in claim 25, wherein the annular secondary conductor is covered by an annular ceramic thin plate over its outer surface.

**27.** A pump as claimed in claim 26, wherein the stator means is covered on one end opposite to the impeller by a ceramic thin plate and the fourth element is mounted to the casing via a synthetic resin, the ceramic thin plate, the synthetic resin and the fourth element sealing the stator means from the liquid and separating the stator means from the impeller.

## Revendications

**1.** Pompe comprenant :
- un carter (106, 135; 206, 235; 306, 335) muni d'une entrée (109; 209; 309) et d'une sortie (121; 221; 321);
- une turbine (113; 213; 313) possédant un axe de rotation et placée dans le carter (106, 135; 206, 235; 306, 335);
- un moyen de rotor (128; 243; 343) disposé dans la turbine;
- un moyen de stator (123; 242, 245; 323, 342) placé dans le carter (106, 135; 206, 235; 306, 335) et appliquant la force motrice au moyen de rotor (128; 243; 343);
- un premier élément (131; 250; 331) fixé à une extrémité de la turbine (113; 213; 313) dans un plan perpendiculaire à l'axe de rotation de la turbine (113; 213; 313) et
- un second élément fixe (132; 249; 332) placé dans le carter (106, 135; 206, 235; 306, 335) à l'opposé du premier élément (131; 250; 331) de façon parallèle,
les premier et second éléments (131, 132; 250, 249; 331, 332) étant munis d'une surface plate respective, ces surfaces étant opposées et une des surfaces plates opposées des premier et second éléments possédant un motif de gorges en spirale (138; 238),
pompe caractérisée en ce que le moyen de rotor (128; 243; 343) et le moyen de stator (123; 242, 245; 323, 342) sont placés selon une direction axiale dudit axe de rotation de la turbine (113; 213; 313) avec un intervalle axial de façon à ce que la force magnétique entre le moyen de rotor et le moyen de stator supporte radialement la turbine.

**2.** Pompe selon la revendication 1, dans laquelle la pompe comprend de plus un moyen de séparation (132A; 237; 332) s'étendant dans un plan perpendiculaire à l'axe de rotation de la turbine (113; 213; 313) et monté sur le carter (106, 135; 206, 235; 306, 335) pour séparer la turbine (113; 213; 313) du moyen de stator (123; 242, 245; 323, 342).

**3.** Pompe selon la revendication 1, dans laquelle les premier et second éléments (131, 132; 249, 250; 331, 332) sont réalisés en un matériau de céramique.

**4.** Pompe selon la revendication 3, dans laquelle le matériau de céramique est un corps fritté choisi parmi le $\alpha$-SiC, $\beta$-SiC, $Al_2O_3$ et $Si_3N_4$.

**5.** Pompe selon la revendication 3, dans laquelle le motif de gorges en spirale est formé par un processus de grenaillage.

**6.** Pompe selon la revendication 2, dans laquelle le premier élément (131; 321) est fixé sur la partie centrale de l'extrémité arrière de la turbine (113; 313), l'extrémité arrière de la turbine faisant face au moyen de séparation (132A; 332) et le premier élément est muni d'un motif de gorges en spirale (138) sur sa surface plate.

**7.** Pompe selon la revendication 2, dans laquelle le premier élément (250) est fixé sur la partie centrale de l'extrémité avant de la turbine (213), l'extrémité arrière de la turbine faisant face au moyen de séparation (237) et le second élément (249) est muni d'un motif de gorges en spirale (238) sur sa surface plate.

**8.** Pompe selon la revendication 6, dans laquelle la pompe (313) est munie d'un trou traversant central (322) le long de son axe de rotation et le premier élément (331) est constitué par une plaque annulaire fixée sur la turbine coaxialement au trou traversant central.

**9.** Pompe selon la revendication 6, dans laquelle le premier élément (131; 331) est constitué par une plaque circulaire qui est fixée sur la turbine (113; 313) coaxialement à son axe de rotation.

10. Pompe selon la revendication 7, dans laquelle le premier élément (250) est constitué par une plaque annulaire et le second élément (249) est constitué par une plaque annulaire de même forme que celle du premier élément, le second élément étant monté sur la partie d'entrée du carter (206).

11. Pompe selon la revendication 10, dans laquelle la pompe comprend de plus, un troisième élément (248) fixé sur la partie centrale de l'extrémité arrière de la turbine (213) dans un plan perpendiculaire à l'axe de rotation de la turbine et un quatrième élément fixe (247) placé dans le carter, opposé au troisième élément de façon parallèle, les troisième et quatrième éléments étant réalisés en un matériau de céramique.

12. Pompe selon la revendication 8, dans laquelle le moyen de rotor (343) est constitué par un aimant permanent annulaire qui est disposé dans l'extrémité arrière externe de la turbine (313), entourant le premier élément (331).

13. Pompe selon la revendication 9, dans laquelle le moyen de rotor est constitué par un conducteur annulaire secondaire qui est placé dans l'extrémité arrière externe de la turbine, entourant le premier élément.

14. Pompe selon la revendication 11, dans laquelle le moyen de rotor (243) est constitué par un aimant permanent annulaire qui est placé dans l'extrémité arrière externe de la turbine (213), entourant le troisième élément (248).

15. Pompe selon la revendication 11, dans laquelle les troisième et quatrième éléments (248, 247) sont munis chacun de gorges (252, 251) sur leurs surfaces opposées le long de l'axe de rotation de la turbine (213) et une petite bille (246) est placée dans l'espace constitué par les gorges.

16. Pompe selon la revendication 12, dans laquelle l'aimant permanent annulaire (343) est recouvert d'une plaque fine annulaire en céramique sur sa surface externe et est fixé par une plaque annulaire en fer (344) sur sa surface arrière.

17. Pompe selon la revendication 14, dans laquelle l'aimant permanent annulaire (243) est recouverte d'une plaque fine annulaire en céramique (226) sur sa surface externe et est fixé par une plaque annulaire en fer (244) sur sa surface arrière.

18. Pompe selon la revendication 13, dans laquelle le conducteur annulaire secondaire est recouvert d'une fine plaque annulaire en céramique sur sa surface externe.

19. Pompe selon la revendication 15, dans laquelle le diamètre de la petite bille (246) est supérieur à celui de l'espace de façon à ce que les surfaces opposées des troisième et quatrième éléments (248; 246) puissent être séparées l'une de l'autre.

20. Pompe selon la revendication 15, dans laquelle le diamètre de la petite bille est inférieur à celui de l'espace, les troisième et quatrième éléments étant prévus pour buter l'un contre l'autre sur leurs surfaces plates, une des surfaces plates opposées des troisième et quatrième éléments possédant un motif de gorges en spirale

21. Pompe selon la revendication 16, dans laquelle le second élément (332) est une plaque fine en céramique recouvrant le moyen de stator (323, 342) sur une extrémité opposée à la turbine (313) via une résine synthétique (354) et est montée sur le carter (335) de façon à isoler de façon étanche le moyen de stator du liquide et à séparer le moyen de stator de la turbine.

22. Pompe selon la revendication 17, dans laquelle le moyen de stator (242, 245) est recouvert sur une extrémité opposée à la turbine (213) par une plaque fine en céramique (237) et le quatrième élément (247) est monté sur le carter (235) via une résine synthétique (254), la plaque fine en céramique, la résine synthétique et le quatrième élément isolant le moyen de stator du liquide et séparant le moyen de stator de la turbine.

23. Pompe selon la revendication 18, dans laquelle le moyen de stator (123; 323; 342) est recouvert sur une extrémité opposée à la turbine (113; 313) par une plaque fine en céramique (132A; 332) et le second élément (132; 332) est monté sur le carter (133; 335) via une résine synthétique (134; 354), la plaque fine en céramique, la résine synthétique et le second élément isolant de façon étanche le moyen de stator du liquide et séparant le moyen de stator de la turbine.

24. Pompe selon la revendication 9, dans laquelle le moyen de rotor (128; 343) est constitué par un aimant permanent annulaire qui est placé à l'extrémité arrière externe de la turbine (113; 313) et entoure le premier élément (131; 331).

**25.** Pompe selon la revendication 15, dans laquelle le moyen de rotor est constitué par un conducteur secondaire annulaire qui est placé à l'extrémité arrière externe de la turbine et entoure le troisième élément.

**26.** Pompe selon la revendication 25, dans laquelle le conducteur secondaire annulaire est recouvert par une plaque fine annulaire en céramique sur sa surface externe.

**27.** Pompe selon la revendication 26, dans laquelle le moyen de stator est recouvert à une extrémité opposée à la turbine par une plaque fine en céramique et le quatrième élément est monté sur le carter via une résine synthétique, la plaque fine en céramique, la résine synthétique et le quatrième élément isolant de façon étanche le moyen de stator du liquide et séparant le moyen de stator de la turbine.

**Patentansprüche**

**1.** Pumpe mit:
einem Gehäuse (106,135; 206,235; 306,335) mit einem Einlaß (109;209;309) und einem Auslaß (121;221;321);
einem Flügelrad (113;213;313), dessen Rotationsachse in dem Gehäuse (106,135; 206,235; 306,335) verläuft;
einem in dem Flügelrad angeordneten Rotor (128;243;343);
einem in dem Gehäuse (106,135; 206,235; 306,335) angeordneten Stator (123;242,245;323,342), der eine Antriebskraft auf den Rotor (128;243;343) ausübt;
einem ersten Element (131;250;331), welches an einem Ende des Flügelrades (113;213;313) in einer zu der Rotationsachse des Flügelrades (113;213;313) senkrechten Ebene angebracht ist; und
einem zweiten stationären Element (132;249;332), welches in dem Gehäuse (106,135; 206,235; 306,335) gegenüber dem ersten Element (131;250;331) parallel zu diesem angeordnet ist,
wobei das erste und das zweite Element (131,132;250,249; 331,332) jeweils mit einer entsprechenden flachen Oberfläche versehen sind, die einander gegenüberliegen, und von denen eine ein spiralförmiges Rillenmuster (138;238) aufweist,
**dadurch gekennzeichnet,** daß der Rotor (128;243;343) und der Stator (123;242,245;323,342) in axialer Richtung der Rotationsachse des Flügelrades (113;213;313) so angeordnet sind, daß sie einen axialen Zwischenraum aufweisen, so daß die magnetische Kraft zwischen dem Rotor und dem Stator das Flügelrad in radialer Richtung trägt.

**2.** Pumpe nach Anspruch 1,
**gekennzeichnet durch** Trenneinrichtungen (132A;237;332), die in einer Ebene senkrecht zu der Rotationsachse des Flügelrades (113;213;313) liegen und an dem Gehäuse (106, 135;206,235;306,335) befestigt sind, um das Flügelrad (113;213;313) von dem Stator (123;242,245;323,342) zu trennen.

**3.** Pumpe nach Anspruch 1,
**dadurch gekennzeichnet,** daß die ersten und zweiten Elemente (131,132;249,250;331,332) aus keramischem Material gefertigt sind.

**4.** Pumpe nach Anspruch 3,
**dadurch gekennzeichnet,** daß das keramische Material ein gesinterter Körper ist, der aus der Gruppe der $\alpha$-SiC, $\beta$-SiC, $Al_2O_3$ und $Si_3N_4$ aufweisenden Stoffe ausgewählt ist.

**5.** Pumpe nach Anspruch 3,
**dadurch gekennzeichnet,** daß das spiralförmige Rillenmuster durch ein Kugelstrahlverfahren erzeugt wird.

**6.** Pumpe nach Anspruch 2,
**dadurch gekennzeichnet,** daß das erste Element (131;321) an dem zentralen Bereich des hinteren Endes des Flügelrades (113;313) befestigt ist, daß das hintere Ende des Flügelrades den Trenneinrichtungen (132A;332) zugewandt ist, und daß das erste Element auf seiner flachen Oberfläche mit dem spiralförmigen Rillenmuster (138) versehen ist.

**7.** Pumpe nach Anspruch 2,
**dadurch gekennzeichnet,** daß das erste Element (250) an dem zentralen Bereich des vorderen Endes des Flügelrades (213) befestigt ist, daß das hintere Ende des Flügelrades den Trenneinrichtungen (237) zugewandt ist, und daß das zweite Element (249) auf seiner flachen Oberfläche mit dem spiralförmigen Rillenmuster (238) versehen ist.

**8.** Pumpe nach Anspruch 6,
**dadurch gekennzeichnet,** daß das Flügelrad (313) mit einer zentralen Durchgangsbohrung (322) entlang seiner Rotationsachse versehen ist und daß das erste Element (331) als ringförmige Platte ausgebildet ist, die an dem Flügelrad koaxial zu der zentralen Durchgangsbohrung befestigt ist.

**9.** Pumpe nach Anspruch 6,

dadurch gekennzeichnet, daß das erste Element (131;331) als kreisförmige Platte ausgebildet ist, die an dem Flügelrad (113;313) koaxial zu seiner Rotationsachse befestigt ist.

10. Pumpe nach Anspruch 7,
dadurch gekennzeichnet, daß das erste Element (250) als ringförmige Platte und das zweite Element (249) als ringförmige Platte der gleichen Form wie das erste Element ausgebildet ist, wobei das zweite Element an dem Einlaßbereich des Gehäuses (206) befestigt ist.

11. Pumpe nach Anspruch 10,
dadurch gekennzeichnet, daß die Pumpe ferner ein drittes Element (248) aufweist, welches an dem zentralen Bereich des hinteren Endes des Flügelrades (213) in einer senkrecht zu der Rotationsachse des Flügelrades liegenden Ebene befestigt ist, sowie mit einem vierten stationären Element (247) versehen ist, welches in dem Gehäuse gegenüber dem dritten Element und parallel dazu angeordnet ist, wobei das dritte und vierte Element aus keramischem Material gefertigt sind.

12. Pumpe nach Anspruch 8,
dadurch gekennzeichnet, daß der Rotor (343) als ringförmiger Permanentmagnet ausgebildet ist, der am äußeren hinteren Ende des Flügelrades (313) angeordnet ist und das erste Element (331) umgibt.

13. Pumpe nach Anspruch 9,
dadurch gekennzeichnet, daß der Rotor als ringförmiger sekundärer Leiter ausgebildet ist, der an dem äußeren hinteren Ende des Flügelrades angeordnet ist und das erste Element umgibt.

14. Pumpe nach Anspruch 11,
dadurch gekennzeichnet, daß der Rotor (243) als ringförmiger Permanentmagnet ausgebildet ist, der an dem äußeren hinteren Ende des Flügelrades (213) angeordnet ist und das dritte Element (248) umgibt.

15. Pumpe nach Anspruch 11,
dadurch gekennzeichnet, daß die dritten und vierten Elemente (248,247) jeweils mit Rillen (252,251) an ihren gegenüberliegenden Flächen entlang der Rotationsachse des Flügelrades (213) versehen sind, und eine kleine Kugel (246) in dem durch die Rillen gebildeten Raum vorhanden ist.

16. Pumpe nach Anspruch 12,
dadurch gekennzeichnet, daß der ringförmige Permanentmagnet (343) auf seiner äußeren Oberfläche mit einer dünnen ringförmigen keramischen Platte (Schicht) bedeckt ist und mit einer ringförmigen Eisenplatte (344) an seiner Rückseite befestigt ist.

17. Pumpe nach Anspruch 14,
dadurch gekennzeichnet, daß der ringförmige Permanentmagnet (243) auf seiner äußeren Oberfläche mit einer dünnen ringförmigen keramischen Platte (226) bedeckt ist und mit einer ringförmigen Eisenplatte (244) an seiner Rückseite befestigt ist.

18. Pumpe nach Anspruch 13,
dadurch gekennzeichnet, daß die äußere Fläche des ringförmigen sekundären Leiters mit einer dünnen ringförmigen keramischen Platte bedeckt ist.

19. Pumpe nach Anspruch 15,
dadurch gekennzeichnet, daß der Durchmesser der kleinen Kugel (246) größer ist als der des Raumes, so daß die gegenüberliegenden Flächen der dritten und vierten Elemente (248;246) voneinander getrennt werden können.

20. Pumpe nach Anspruch 15,
dadurch gekennzeichnet, daß der Durchmesser der kleinen Kugel kleiner ist als der des Raumes, daß die dritten und vierten Elemente so ausgebildet sind, daß sie mit ihren flachen Oberflächen aneinander anliegen, und daß eine der gegenüberliegenden flachen Oberflächen der dritten und vierten Elemente ein spiralförmiges Rillenmuster aufweisen.

21. Pumpe nach Anspruch 16,
dadurch gekennzeichnet, daß das zweite Element (332) als dünne keramische Platte ausgebildet ist, die den Stator (323,342) an einem dem Flügelrad (313) gegenüberliegenden Ende über ein Kunstharzmaterial (354) abdeckt und an dem Gehäuse (335) so befestigt ist, daß der Stator gegen Flüssigkeiten abgedichtet und von dem Flügelrad getrennt ist.

22. Pumpe nach Anspruch 17,
dadurch gekennzeichnet, daß der Stator (242,245) an einem dem Flügelrad (213) gegenüberliegenden Ende mit einer dünnen keramischen Platte (237) bedeckt ist, und daß das vierte Element (247) an dem Gehäuse (235) mit einem Kunstharz (254) befestigt ist, wobei die dünne keramische Platte, das Kunstharz und das vierte Element den Stator gegen Flüssigkeiten abdichten und von dem Flügelrad trennen.

**23.** Pumpe nach Anspruch 18,
**dadurch gekennzeichnet,** daß der Stator (123;323,342) an einem dem Flügelrad (113;313) gegenüberliegenden Ende mit einer dünnen keramischen Platte (132A;332) bedeckt ist, und daß das zweite Element (132;332) mit einem Kunstharzmaterial (134;354) an dem Gehäuse (133;335) befestigt ist, wobei die dünne keramische Platte, das Kunstharz und das zweite Element den Stator gegen Flüssigkeiten abdichten und von dem Flügelrad trennen.

**24.** Pumpe nach Anspruch 9,
**dadurch gekennzeichnet,** daß der Rotor (128;343) als ringförmiger Permanentmagnet ausgebildet ist, der am äußeren hinteren Ende des Flügelrades (113;313) angeordnet ist und das erste Element (131;331) umgibt.

**25.** Pumpe nach Anspruch 15,
**dadurch gekennzeichnet,** daß der Rotor als ringförmiger sekundärer Leiter ausgebildet ist, der am äußeren hinteren Ende des Flügelrades angeordnet ist und das dritte Element umgibt.

**26.** Pumpe nach Anspruch 25,
**dadurch gekennzeichnet,** daß der ringförmige sekundäre Leiter mit einer dünnen ringförmigen keramischen Platte an seiner äußeren Oberfläche bedeckt ist.

**27.** Pumpe nach Anspruch 26,
**dadurch gekennzeichnet,** daß der Stator an einem dem Flügelrad gegenüberliegenden Ende mit einer dünnen keramischen Platte bedeckt ist, und daß das vierte Element an dem Gehäuse mit einem Kunstharzmaterial befestigt ist, wobei die dünne keramische Platte, das Kunstharz und das vierte Element den Stator gegen Flüssigkeiten abdichten und von dem Flügelrad trennen.

# F I G. 1

FIG. 2

EP 0 240 674 B1

# F I G. 3

17

# FIG. 4

141 →

138

131

139

140

# FIG. 5

129  113  128

130                    130

129                    129
                       128

N

128                    S    130

122    122

S    N    130

122

129                    128

129

S    128

128         N    142

130

129  128

# FIG.6

# F I G. 7

252

248

246

247

251

# F I G. 8

238

249

256

239

209

239A

FIG. 9

# FIG. 10